# FASCICULE DE BREVET EUROPEEN

(11) **EP 3 774 303 B1**
(45) Date de publication et mention de la délivrance du brevet: **03.05.2023**
(21) Numéro de dépôt: 19715962.7
(22) Date de dépôt: 11.04.2019
(51) Int. Cl.: B29C 67/04, B29C 33/10

(54) **OUTILLAGE POUR LA MISE EN OEUVRE D'UN PROCÉDÉ DE FRITTAGE FLASH D'UNE POUDRE D'ORIGINE NATURELLE**
WERKZEUG ZUR UMSETZUNG EINES VERFAHRENS ZUM FLASH-SINTERN EINES NATÜRLICHEN PULVERS
TOOL FOR IMPLEMENTING A METHOD FOR FLASH SINTERING A NATURAL POWDER

(30) Priorité: 11.04.2018 FR 1853179
(43) Date de publication de la demande: 17.02.2021
(73) Titulaire: SINTERMAT, 21150 Venarey-les-Laumes (FR)
(72) Inventeur: NAIMI, Foad, 21150 Venarey-les-Laumes (FR); BERNARD, Frédéric, 21000 Dijon (FR)
(74) Mandataire: Cabinet Netter
(86) Numéro de dépôt international: PCT/EP2019/059349
(87) Numéro de publication internationale: WO 2019/197579

(56) Documents cités:
- WO-A1-2012/120235
- FR-A1- 3 021 161

## Description

La présente invention se rapporte à l'utilisation conjointe d'un outillage comprenant une matrice et de deux pistons pour la mise en oeuvre d'un procédé de frittage d'une poudre. L'invention porte plus particulièrement sur un procédé de frittage. Le frittage est dénommé « flash » en raison de sa brève durée. La poudre à fritter peut être organique. La poudre à fritter peut être composée de matière naturelle, au moins en partie.

### État de la technique

Le frittage sous chargement uniaxial est une technique de mise en forme d'un matériau pulvérulent, communément nommé poudre, permettant l'obtention d'un matériau massif et dense. Cette opération de frittage consiste à chauffer voire appliquer simultanément ou non une charge uniaxiale par l'intermédiaire d'au moins un piston sur une poudre placée à l'intérieur d'une matrice. De façon avantageuse, cette opération de frittage permet d'augmenter la compacité de la poudre pour lui conférer une plus grande cohésion mécanique. Le frittage permet ainsi d'obtenir des pièces de formes complexes sans nécessiter d'opération d'usinage ou de parachèvement supplémentaires.

Afin de réduire le temps de fabrication d'une pièce par cette technique, il a été proposé une nouvelle technique de frittage intitulée « frittage flash ». Cette technique consiste à utiliser un outillage comprenant une matrice et deux pistons de compression électriquement conducteurs, afin de permettre la compression de la poudre et son chauffage par l'intermédiaire d'un courant électrique de forte intensité parcourant la matrice et les pistons. Ainsi, la matrice produit de la chaleur par effet joule au plus près de la poudre, ce qui permet une vitesse de chauffage élevée et un bon transfert de chaleur au sein de la poudre. Il en résulte alors qu'à taux de densification équivalents, la technique de frittage flash utilise des températures et des durées de frittage inférieures comparées aux techniques conventionnelles de frittage. De plus, cette technologie permet la conduite du frittage sous atmosphère contrôlée. Ainsi WO2012/120235 concerne un procédé de réalisation d'une barrière thermique dans un système de protection multicouche d'une pièce métallique en superalliage. FR 3 021 151 décrit un procédé de préparation d'une rondelle thermoélectrique par frittage assisté par courant pulsé, par frittage à chaud ou par frittage naturel par cuisson sans pression.

Toutefois, les inventeurs ont observé que cette technique de frittage flash favorise une usure prématurée voire une rupture des éléments constituant le moule, c'est-à-dire l'outillage constitué d'une matrice et de pistons de compression, lorsque certains types de poudre sont traités, en particulier les poudres comprenant de la matière organique. Ils ont aussi observé que les pièces frittées à partir de matériaux comprenant partiellement ou totalement de la matière organique s'effritent aisément et ne possèdent pas les caractéristiques souhaitées en termes d'esthétisme (aspect de surface), en termes de densité (peu de tenue mécanique ou densité inférieure à la densité théorique), en termes de phases (formation de phases secondaires,....) comparativement aux mêmes pièces réalisées avec des métaux ou des céramiques par exemple.

Les inventeurs ont donc souhaité trouver une solution à ce problème pour étendre l'application de cette technique de frittage flash à un plus grand nombre de poudres de natures différentes, tout en limitant les risques d'endommagement et de destruction de l'outillage et en atteignant des qualités de produit fini comparables à celles obtenues avec les métaux ou les céramiques.

### Description de l'invention

Pour remédier aux inconvénients précités, les inventeurs proposent un outillage pour la mise en oeuvre d'un procédé de frittage flash, d'une poudre composée d'au moins un élément organique, de préférence d'origine naturelle. Dans le cadre de l'invention, on entend par un « élément organique » une matière comprenant de l'oxygène et du carbone. À titre d'exemples non limitatifs, une poudre d'origine naturelle peut être obtenue à partir de corne, de bois de cerf, de bois de genévrier, de cuir, plumes, coquillage, etc. De préférence, les tailles de particules ou de grains composant la poudre sont notamment supérieures à 50 µm. L'outillage comprend une matrice délimitée par une face externe et une face interne, la face interne délimite une chambre ouverte au niveau d'une surface supérieure de la matrice, et au moins un piston de compression, le ou les pistons de compression étant électriquement conducteurs.

L'invention est remarquable en ce que la matrice comporte au moins un passage entre sa face externe et sa face interne, configuré pour permettre l'évacuation d'un gaz généré par une poudre composée d'au moins un élément organique, présente dans la chambre lors d'un procédé de frittage flash.

De façon avantageuse, au moins un passage est adapté pour permettre l'évacuation d'au moins une espèce gazeuse induite par la poudre lors de la décomposition et/ou de l'évaporation d'éléments organiques. L'évacuation des espèces gazeuses émise par la poudre à travers un passage permet d'éviter une montée excessive de la pression gazeuse dans la chambre de la matrice. Les inventeurs ont ainsi constaté que la présence d'au moins un passage permet avantageusement de prévenir un endommagement prématuré de l'outillage lors d'un frittage flash d'une poudre libérant une quantité importante de gaz. En effet, sans la présence d'au moins un passage, le gaz libéré par la poudre lors de sa montée en température, reste confiné dans l'outillage ou du moins ne s'évacue pas suffisamment rapidement pour éviter une déformation ou une rupture de la matrice et/ou d'un ou des pistons appliquant une pression sur la poudre, lors d'un procédé de frittage flash.

Selon l'invention, au moins un passage forme une fente entre deux faces latérales disjointes de la matrice. De préférence, l'écart maximal entre les deux faces latérales est égal ou inférieur au plus petit diamètre des particules d'une poudre composée d'au moins un élément organique que l'on souhaite fritter dans la chambre. Ainsi, de façon avantageuse, la poudre est confinée dans la chambre au moins jusqu'à sa solidification partielle, pour prévenir une obstruction du passage par ladite poudre. Bien entendu, la valeur de cet écart maximal dépend de la granulométrie de la poudre à fritter.

À titre d'exemple non limitatif, la matrice est configurée pour permettre aux deux faces latérales de s'écarter au maximum de 100 µm, de préférence de 50 µm. Selon un mode de réalisation préféré, la matrice est configurée pour permettre aux deux faces latérales de s'écarter de 100µm au maximum, de préférence de 50µm au maximum, lorsqu'une pression égale ou inférieure à 200 MPa, préférablement égale ou supérieure à 20 MPa est appliquée sur la face interne de la matrice.

Pour cela, la matrice, en fonctionnement normal, travaille dans son domaine élastique et peut posséder un comportement ductile permettant d'assurer la jonction des faces latérales et, ce, pour obturer complètement le passage lorsque la pression appliquée sur la face interne de la matrice est égale ou inférieure à une première valeur seuil, et empêcher l'écartement desdites faces latérales au-delà de la valeur maximale mentionnée ci-dessus lorsque la pression appliquée sur la face interne de la matrice est égale ou supérieure à une deuxième valeur seuil. La deuxième valeur seuil est bien évidemment supérieure à la première valeur seuil. Ce mode de réalisation permet avantageusement au passage d'avoir une dimension minimale inférieure à la granulométrie de la poudre à pression et température ambiantes, mais que cette dimension minimale puisse être plus importante que la granulométrie de la poudre après solidification » de la pièce de sorte à libérer plus de gaz sans qu'il soit possible aux grains « compactés » de s'échapper de la matrice à travers ledit passage.

Selon une autre variante de réalisation de l'invention, les faces latérales sont de forme complémentaire.

Selon une autre variante de réalisation de l'invention, la matrice est ouverte au niveau de sa surface supérieure, de manière à permettre l'insertion d'un ou deux pistons dans la chambre, et en au moins un passage s'étend selon une direction normale ou sensiblement normale à la direction d'insertion du ou des pistons dans la chambre. En d'autres termes, le passage s'étend selon une direction radiale ou sensiblement radiale à la direction d'insertion du ou des pistons. Selon un mode de réalisation préféré, les faces latérales sont parallèles ou sensiblement parallèles à la direction d'insertion d'un ou des pistons dans la chambre. Selon une autre variante de réalisation de l'invention, la matrice comporte au moins deux passages, séparant la matrice en plusieurs parties distinctes, lesdites parties étant maintenues ensemble par l'intermédiaire d'un moyen de maintien configuré pour limiter l'écartement à une valeur égale à 100 µm, de préférence égale à 50 µm, entre deux parties adjacentes de la matrice. À titre d'exemple non limitatif, la face externe de la matrice est de forme convexe et les différentes parties de la matrice sont maintenues ensemble par l'intermédiaire d'un anneau ou d'un collier de serrage positionné autour des parties de la matrice.

Selon une variante de réalisation préférée, deux parties adjacentes de la matrice délimitent un angle dans la chambre et lesdites parties délimitent un passage débouchant le long dudit angle. La présence d'un angle dans la chambre permet avantageusement de réduire localement la pression exercée sur la face interne de la chambre au niveau dudit angle. De ce fait, cela favorise une meilleure évacuation d'un gaz produit par la poudre tout en prévenant l'insertion de la poudre dans le passage. Selon un mode de réalisation préférée, la matrice comprend au moins quatre parties distinctes dont les faces internes délimitent une chambre de forme cubique.

Selon une autre variante de réalisation de l'invention, la chambre est ouverte au niveau d'une surface inférieure de la matrice et au moins un passage débouche au niveau de la surface supérieure et de la surface inférieure de la matrice. Selon le présent exemple, la surface inférieure est opposée à la surface supérieure.

Selon une autre variante de réalisation de l'invention, la matrice est conductrice électriquement. Ainsi, lorsque la matrice est parcourue par un courant électrique, elle agit comme une source de chaleur produite par effet joule, au plus près de la poudre afin de favoriser une élévation rapide de la température d'une poudre présente dans la chambre délimitée par la matrice.

Bien entendu, les différentes caractéristiques, variantes et formes de réalisation mentionnées ci-dessus peuvent être associées les unes avec les autres selon diverses combinaisons, dans la mesure où elles ne sont pas incompatibles ou exclusives les unes des autres.

L'invention concerne également un procédé de frittage flash, conduit sous atmosphère contrôlée, d'une poudre composée d'au moins un élément organique, de préférence d'origine naturelle, à l'aide d'un outillage tel que décrit ci-dessus, mettant en oeuvre :
- une étape de positionnement d'au moins une feuille sur la ou les faces internes de la matrice, de sorte à recouvrir au moins une partie d'un passage débouchant dans la chambre, la ou lesdites feuilles étant perméables à un gaz ; et
- une étape de remplissage de la chambre par une poudre de sorte que la poudre recouvre partiellement ou complètement au moins une feuille, les plus petits grains de la poudre étant de dimensions égales ou supérieures aux dimensions des pores de la ou des feuilles afin d'empêcher l'insertion de la poudre dans le ou les passages recouverts par la ou lesdites feuilles ; et
- une étape de chauffage et/ou d'application d'une charge uniaxiale sur la poudre de sorte à permettre son frittage, sous atmosphère contrôlée, pour permettre la formation puis l'évacuation à travers au moins un passage d'un gaz généré par la poudre.

L'invention concerne également un procédé de frittage flash, conduit sous atmosphère contrôlée, d'une poudre composée d'au moins un élément organique, de préférence d'origine naturelle, à l'aide d'un outillage tel que décrit ci-dessus, et mettant en oeuvre :
- une étape de remplissage de la chambre par une poudre,
- une étape de chauffage et/ou d'application d'une charge uniaxiale sur la poudre de sorte à permettre son frittage, sous atmosphère contrôlée, pour permettre la formation puis l'évacuation à travers au moins un passage d'un gaz généré par la poudre.

Dans un mode de réalisation, le chauffage et l'application d'une charge uniaxiale sur la poudre sont simultanés.

Le procédé de frittage flash décrit ci-dessus permet avantageusement de prévenir l'écoulement d'une poudre contenue dans la chambre à travers le passage, lorsque la poudre comporte des grains de dimensions inférieures à l'écartement maximal des parois latérales. Ainsi, l'utilisation d'une ou plusieurs feuilles permet d'utiliser un même outillage pour fritter des poudres comprenant des tailles de particules ou grains inférieures à l'écartement maximal entre les faces latérales. Selon un mode de réalisation préféré, la ou les feuilles recouvrant un passage sont des feuilles de carbone graphite.

L'invention concerne aussi un procédé de frittage flash, conduit sous atmosphère contrôlée, d'une poudre composée d'au moins un élément organique, de préférence d'origine naturelle, à l'aide d'un outillage tel que décrit ci-dessus, mettant en oeuvre :
- une étape de mise en forme de la poudre préalablement à son insertion dans la chambre, par une méthode de compactage de la poudre à une pression égale ou supérieure à la pression appliquée sur la poudre lors de son frittage dans la chambre ; et
- une étape de remplissage de la chambre par la poudre compactée de sorte que la poudre recouvre partiellement ou complètement la face interne de la chambre ; et
- une étape de chauffage et/ou d'application d'une charge uniaxiale sur la poudre compactée de sorte à permettre son frittage, sous atmosphère contrôlée, pour permettre la formation puis l'évacuation à travers au moins un passage (24) d'un gaz généré par la poudre.

Cette variante de réalisation offre l'avantage d'éviter un écoulement de la poudre 25 dans le ou les passages formés entre les parois latérales de la chambre.

L'invention concerne aussi un procédé de frittage flash, conduit sous atmosphère contrôlée, d'une poudre composée d'au moins un élément organique, de préférence d'origine naturelle, à l'aide d'un outillage tel que décrit ci-dessus, mettant en oeuvre :
- une étape de dégazage réalisé hors de l'équipement en portant la poudre à la température d'élimination des espèces gazeuses,
- une étape de chauffage et/ou d'application d'une charge uniaxiale sur la poudre de sorte à permettre son frittage, sous atmosphère contrôlée.

L'invention concerne aussi un procédé de frittage flash, conduit sous atmosphère contrôlée, d'une poudre composée d'au moins un élément organique, de préférence d'origine naturelle, à l'aide d'un outillage tel que décrit ci-dessus, mettant en oeuvre :
- une étape de dégazage de la poudre compactée (obtenu par compactage à froid), étape réalisée hors de l'équipement à la température d'élimination des espèces gazeuses,
- une étape de chauffage et/ou d'application d'une charge uniaxiale sur la poudre précompactée de sorte à permettre son frittage, sous atmosphère contrôlée.

Dans un mode de réalisation, le chauffage et l'application d'une charge uniaxiale sur la poudre sont simultanés.

### Description des figures

L'invention sera mieux comprise, grâce à la description ci-après, qui se rapporte à des modes de réalisations préférés, donnés à titre d'exemples non limitatifs, et expliqués avec référence aux dessins schématiques annexés, dans lesquels :
- la figure 1 représente une vue en perspective d'une matrice en plusieurs parties selon l'invention ;
- la figure 2 représente une vue en perspective d'une matrice illustrée à la figure 1 dont les parties sont assemblées ensemble pour délimiter une chambre en son centre ;
- la figure 3 représente une vue en perspective d'un outillage selon l'invention comprenant une matrice telle qu'illustrée aux figures 1 et 2 ainsi qu'un moyen de maintien ensemble des parties constituant la matrice ;
- la figure 4 représente une vue en perspective d'un outillage illustré à la figure 3, dans lequel les différentes parties de la matrice prennent appui contre le moyen de maintien de manière à former des passages entre les parties pour permettre l'évacuation d'un gaz contenu dans la chambre de la matrice.

### Description de modes de réalisation détaillés de l'invention

Pour rappel, l'invention vise à proposer un outillage permettant d'étendre l'application de la technique de frittage flash à une poudre composée d'au moins un élément organique, de préférence d'origine naturelle, tout en limitant le risque de détérioration ou de destruction des éléments matrice et/ou piston constituant le l'outillage mis en oeuvre lors d'un procédé de frittage d'une poudre en température et sous charge.

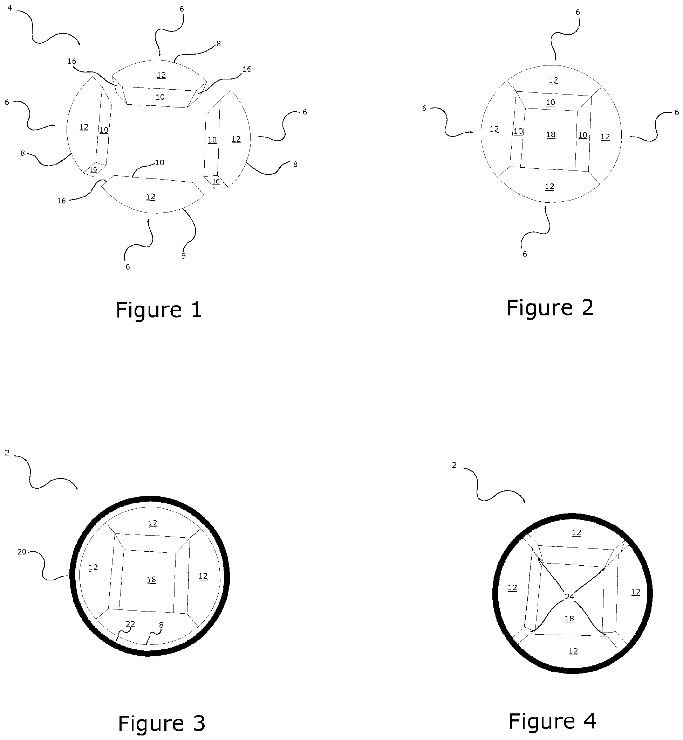

Les figures 1 à 4 illustrent un exemple non limitatif d'un mode de réalisation d'un outillage selon l'invention. Selon la figure 1, l'outillage comprend une matrice 4 constituée de quatre parties distinctes 6 et identiques. Chaque partie distincte 6 est délimitée par une face externe et une face interne. La face externe se compose d'une surface supérieure 12 et d'une surface inférieure parallèles entre elles, reliées par une surface externe 8 de forme convexe. La face interne 10 est opposée à la surface externe 8 et également normale aux faces supérieures et inférieure. Chaque partie distincte 6 de la matrice 4 comporte également deux faces latérales 16 reliant les différentes faces mentionnées ci-dessus. Plus précisément, les faces latérales 16 sont planes et forment avec la face interne 10 un angle dont la valeur est égale à 135° dans un mode de réalisation.

La distance séparant la surface supérieure 12 de la surface inférieure est comprise entre 1 et 900 millimètres, préférablement entre 10 et 100 millimètres. Au niveau d'une face interne 10, deux faces latérales 16 d'un même élément sont séparées d'une distance comprise entre 10 et 300 millimètres. Chaque partie distincte 6 est réalisée à partir d'un matériau électriquement conducteur, de type acier, graphite, alliage de Mo, cermets en fonction des conditions de température et de pression mécanique envisagées.

Comme illustré à la figure 2, les parties distinctes 6 sont configurées pour être assemblées au niveau de leurs faces latérales 16 de manière à délimiter une chambre 18 au centre de la matrice 4. Selon le présent exemple, la chambre 18 est de forme cubique.

Comme illustré à la figure 3, l'outillage 2 comprend également un moyen de maintien sous la forme d'un anneau 20. La face interne 22 de l'anneau est complémentaire à la surface externe 8 du moule. Plus précisément, le diamètre interne de l'anneau est légèrement supérieur au diamètre externe de la matrice 4 lorsque toutes ses parties distinctes 6 sont jointes ensemble au niveau de leurs faces latérales 16. Ainsi, il existe un jeu entre les pièces distinctes 6 et l'anneau 20.

Comme illustré à la figure 4, la présence de ce jeu permet aux pièces distinctes 6 de s'écarter légèrement entre elles de sorte à former des passages 24 entre les faces latérales 16 en vis-à-vis. Ainsi, les passages 24 favorisent l'évacuation d'un gaz présent dans la chambre 18, notamment en cas de surpression. Cela permet avantageusement d'éviter un endommagement de la matrice 4 lors d'un dégazage important et rapide d'un matériau fritté dans la chambre 18. Plus précisément, l'anneau 20 et la matrice 4 sont configurés pour permettre un écartement maximal entre les faces latérales 16 en vis-à-vis, qui est inférieur à la plus petite granulométrie de la poudre que l'on souhaite fritter dans l'outillage 2. À titre d'exemple, l'écartement entre deux faces latérales 16 adjacentes est compris entre 50 et 100 µm.

La hauteur de l'anneau 20 est bien entendu inférieure à la hauteur de la matrice 4 afin que l'anneau ne recouvre pas l'intégralité des ouvertures 24 au niveau des faces externes 8 des parties 6. À titre d'exemple, l'anneau 20 est de même nature que les parties 6.

Selon une variante de réalisation, l'anneau 20 est réalisé dans un matériau poreux au gaz, afin de favoriser l'évacuation d'une plus grande quantité de gaz à travers les passages 24.

## Revendications

1. Outillage (2) pour la mise en oeuvre d'un procédé de frittage flash, d'une poudre composée d'au moins un élément organique, de préférence d'origine naturelle, comprenant une matrice (4) délimitée par une face externe (8, 12) et une face interne (10), la face interne (10) délimite une chambre (18) ouverte au niveau d'une surface supérieure (12) de la matrice (4), la matrice (4) comporte au moins un passage (24) entre sa face externe (8, 12) et sa face interne (10), configuré pour permettre l'évacuation d'un gaz généré par une poudre composée d'au moins un élément organique, présente dans la chambre (18) lors de la mise en oeuvre d'un procédé de frittage flash, **caractérisé en ce qu'**au moins un passage (24) forme une fente entre deux faces latérales (16) disjointes de la matrice (4).

2. Outillage (2) selon la revendication 1, **caractérisé en ce que** l'écart maximal entre les deux faces latérales (16) est égal ou inférieur au plus petit diamètre des particules d'une poudre composée d'au moins un élément organique que l'on souhaite fritter dans la chambre (18).

3. Outillage (2) selon la revendication 1 ou 2, **caractérisé en ce que** la matrice (4) est configurée pour permettre aux deux faces latérales (16) de s'écarter au maximum de 100µm, de préférence de 50µm.

4. Outillage (2) selon l'une des revendications 1 à 3, **caractérisé en ce que** la matrice est configurée pour permettre aux deux faces latérales (16) de s'écarter de 100µm au maximum, de préférence de 50µm au maximum, lorsqu'une pression égale ou inférieure à 200 MPa est appliquée sur la face interne (10) de la matrice (4).

5. Outillage (2) selon l'une des revendications 1 à 4, **caractérisé en ce que** les faces latérales (16) sont de forme complémentaire.

6. Outillage (2) selon l'une des revendications 1 à 5, **caractérisé en ce que** la matrice (4) est ouverte au niveau de sa surface supérieure (12), de manière à permettre l'insertion d'un moins un piston dans la chambre (18), et **en ce qu'**au moins un passage (24) s'étend selon une direction normale ou sensiblement normale à la direction d'insertion du piston dans la chambre (18).

7. Outillage (2) selon la revendication 6, **caractérisé en ce que** les faces latérales (16) sont parallèles ou sensiblement parallèles à la direction d'insertion d'un piston dans la chambre (18).

8. Outillage (2) selon l'une des revendications 1 à 7, **caractérisé en ce que** la matrice (4) comporte au moins deux passages (24), séparant la matrice (4) en plusieurs parties (6) distinctes, lesdites parties (6) étant maintenues ensemble par l'intermédiaire d'un moyen de maintien (20) configuré pour limiter l'écartement à une valeur égale à 100µm, de préférence égale à 50µm, entre deux parties (6) adjacentes de la matrice (4).

9. Outillage (2) selon la revendication 8, **caractérisé en ce que** deux parties (6) adjacentes de la matrice (4) forment un angle dans la chambre (18) et **en ce que** lesdites parties délimitent un passage (24) débouchant le long dudit angle.

10. Outillage (2) selon la revendication 8 ou 9, **caractérisé en ce que** la matrice (4) comprend au moins quatre parties (6) distinctes, délimitant une chambre (18) de forme cubique.

11. Outillage (2) selon l'une des revendications 1 à 10, **caractérisé en ce que** la chambre (18) est ouverte au niveau d'une surface inférieure de la matrice (4) et **en ce qu'**au moins un passage (24) débouche au niveau de la surface supérieure (12) et de la surface inférieure de la matrice (4).

12. Outillage (2) selon l'une des revendications 1 à 11, **caractérisé en ce que** la matrice est conductrice électriquement.

13. Procédé de frittage flash, conduit sous atmosphère contrôlée, d'une poudre composée d'au moins un élément organique, de préférence d'origine naturelle, à l'aide d'un outillage (2) selon l'une des revendications 1 à 12, mettant en oeuvre :
- une étape de positionnement d'au moins une feuille sur la ou les faces internes (10) de la matrice (4), de sorte à recouvrir au moins une partie d'un passage (24) débouchant dans la chambre (18), la ou lesdites feuilles étant perméables à un gaz ; et
- une étape de remplissage de la chambre (18) par une poudre de sorte que la poudre recouvre partiellement ou complètement au moins une feuille, les plus petites particules de poudre étant de dimensions égales ou supérieures aux dimensions des pores de la ou des feuilles afin d'empêcher l'insertion de la poudre dans le ou les passages (24) recouverts par la ou lesdites feuilles ; et
une étape de chauffage et/ou d'application d'une charge uniaxiale sur la poudre de sorte à permettre son frittage, sous atmosphère contrôlée, pour permettre la formation puis l'évacuation à travers au moins un passage (24) d'un gaz généré par la poudre.

14. Procédé de frittage flash, conduit sous atmosphère contrôlée, d'une poudre composée d'au moins un élément organique, de préférence d'origine naturelle, à l'aide d'un outillage (2) selon l'une des revendications 1 à 12, mettant en oeuvre :
une étape de mise en forme de la poudre préalablement à son insertion dans la chambre (18), par une méthode de compactage de la poudre à une pression égale ou supérieure à la pression appliquée sur la poudre lors de son frittage dans la chambre (18) ; et
- une étape de remplissage de la chambre (18) par la poudre compactée de sorte que la poudre recouvre partiellement ou complètement la face interne (10) de la chambre (18) ; et
une étape de chauffage et/ou d'application d'une charge uniaxiale sur la poudre compactée de sorte à permettre son frittage, sous atmosphère contrôlée, pour permettre la formation puis l'évacuation à travers au moins un passage (24) d'un gaz généré par la poudre.

## Patentansprüche

1. Werkzeug (2) zur Durchführung eines Verfahrens zum Flash-Sintern eines Pulvers, das sich aus mindestens einem organischen Element, vorzugsweise natürlichen Ursprungs, zusammensetzt, eine Matrize (4) umfassend, die durch eine Außenfläche (8, 12) und eine Innenfläche (10) begrenzt ist, wobei die Innenfläche (10) eine Kammer (18) begrenzt, die an einer oberen Oberfläche (12) der Matrize (4) offen ist, wobei die Matrize (4) mindestens einen Durchlass (24) zwischen ihrer Außenfläche (8, 12) und ihrer Innenfläche (10) beinhaltet, der konfiguriert ist, um das Ausbringen eines Gases zu ermöglichen, das durch ein Pulver erzeugt wird, das sich aus mindestens einem organischen Element zusammensetzt, das bei der Durchführung eines Verfahrens zum Flash-Sintern in der Kammer (18) vorhanden ist, **dadurch gekennzeichnet, dass** mindestens ein Durchlass (24) einen Spalt zwischen zwei getrennten Seitenflächen (16) der Matrize (4) bildet.

2. Werkzeug (2) nach Anspruch 1, **dadurch gekennzeichnet, dass** der maximale Abstand zwischen den beiden Seitenflächen (16) gleich wie oder kleiner als der kleinste Durchmesser der Teilchen eines Pulvers ist, das sich aus mindestens einem organischen Element zusammensetzt, das man in der Kammer (18) sintern möchte.

3. Werkzeug (2) nach Anspruch 1 oder 2, **dadurch gekennzeichnet, dass** die Matrize (4) konfiguriert ist, um es den Seitenflächen (16) zu ermöglichen, sich um maximal 100 pm, vorzugsweise um 50 µm voneinander weg zu bewegen.

4. Werkzeug (2) nach einem der Ansprüche 1 bis 3, **dadurch gekennzeichnet, dass** die Matrize konfiguriert ist, um es den beiden Seitenflächen (16) zu ermöglichen, sich um maximal 100 pm, vorzugsweise um 50 µm voneinander weg zu bewegen, wenn ein Druck gleich wie oder kleiner als 200 MPa an die Innenfläche (10) der Matrize (4) angelegt wird.

5. Werkzeug (2) nach einem der Ansprüche 1 bis 4, **dadurch gekennzeichnet, dass** die Seitenflächen (16) von ergänzender Form sind.

6. Werkzeug (2) nach einem der Ansprüche 1 bis 5, **dadurch gekennzeichnet, dass** die Matrize (4) an ihrer oberen Oberfläche (12) offen ist, um das Einführen mindestens eines Kolbens in die Kammer (18) zu ermöglichen, und dadurch, dass sich mindestens ein Durchlass (24) in einer normalen oder im Wesentlichen normalen Richtung zur Einführungsrichtung des Kolbens in die Kammer (18) erstreckt.

7. Werkzeug (2) nach Anspruch 6, **dadurch gekennzeichnet, dass** die Seitenflächen (16) parallel oder im Wesentlichen parallel zur Einführungsrichtung eines Kolbens in die Kammer (18) sind.

8. Werkzeug (2) nach einem der Ansprüche 1 bis 7, **dadurch gekennzeichnet, dass** die Matrize (4) mindestens zwei Durchlässe (24) beinhaltet, welche die Matrize (4) in mehrere verschiedene Teile (6) unterteilen, wobei die Teile (6) durch ein Haltemittel (20) zusammengehalten werden, das konfiguriert ist, um das voneinander Wegbewegen auf einen Wert gleich 100 µm, vorzugsweise gleich 50 µm zwischen zwei angrenzenden Teilen (6) der Matrize (4) zu begrenzen.

9. Werkzeug (2) nach Anspruch 8, **dadurch gekennzeichnet, dass** zwei angrenzende Teile (6) der Matrize (4) einen Winkel in der Kammer (18) bilden, und dadurch, dass die Teile einen Durchlass (24) begrenzen, der entlang des Winkels einmündet.

10. Werkzeug (2) nach Anspruch 8 oder 9, **dadurch gekennzeichnet, dass** die Matrize (4) mindestens vier verschiedene Teile (6) umfasst, die eine Kammer (18) in Würfelform begrenzen.

11. Werkzeug (2) nach einem der Ansprüche 1 bis 10, **dadurch gekennzeichnet, dass** die Kammer (18) an einer unteren Oberfläche der Matrize (4) offen ist, und dadurch, dass mindestens ein Durchlass (24) an der oberen Oberfläche (12) und der unteren Oberfläche der Matrize (4) einmündet.

12. Werkzeug (2) nach einem der Ansprüche 1 bis 11, **dadurch gekennzeichnet, dass** die Matrize elektrisch leitfähig ist.

13. Verfahren zum Flash-Sintern, das unter kontrollierter Atmosphäre ausgeführt wird, eines Pulvers, das sich aus mindestens einem organischen Element, vorzugsweise natürlichen Ursprungs, zusammensetzt, mithilfe eines Werkzeugs (2) nach einem der Ansprüche 1 bis 12, das Folgendes durchführt:
einen Schritt zum Positionieren mindestens eines Blattes auf der oder den Innenflächen (10) der Matrize (4), um mindestens einen Teil eines Durchlasses (24) abzudecken, der in die Kammer (18) einmündet, wobei das oder die Blätter gasdurchlässig sind; und
- einen Schritt zum Füllen der Kammer (18) mit einem Pulver, sodass das Pulver mindestens ein Blatt teilweise oder vollständig abdeckt, wobei die kleinsten Pulverteilchen Abmessungen aufweisen, die gleich wie, oder größer als die Abmessungen der Poren des oder der Blätter sind, um das Einbringen des Pulvers in den oder die Durchlässe (24) zu verhindern, die durch das oder die Blätter abgedeckt sind; und
einen Schritt zum Erhitzen und/oder Anlegen einer einachsigen Last an das Pulver, um dessen Sinterung in einer kontrollierten Atmosphäre zu ermöglichen, um das Bilden, und danach Ausbringen, durch mindestens einen Durchlass (24) hindurch, eines Gases zu ermöglichen, das durch das Pulver erzeugt wird.

14. Verfahren zum Flash-Sintern, das unter kontrollierter Atmosphäre ausgeführt wird, eines Pulvers, das sich aus mindestens einem organischen Element, vorzugsweise natürlichen Ursprungs, zusammensetzt, mithilfe eines Werkzeugs (2) nach einem der Ansprüche 1 bis 12, das Folgendes durchführt:
einen Schritt zum In-Form-Bringen des Pulvers vor dessen Einbringen in die Kammer (18) durch ein Verfahren zum Verdichten des Pulvers mit einem Druck gleich wie oder größer als der Druck, der bei dessen Sintern in der Kammer (18) an das Pulver angelegt wird; und
- einen Schritt zum Füllen der Kammer (18) mit dem verdichteten Pulver, sodass das Pulver die Innenfläche (10) der Kammer (18) teilweise oder vollständig abdeckt; und
einen Schritt zum Erhitzen und/oder Anlegen einer einachsigen Last an das verdichtete Pulver, um dessen Sinterung in kontrollierter Atmosphäre zu ermöglichen, um das Bilden, und danach Ausbringen, durch mindestens einen Durchlass (24) hindurch, eines Gases zu ermöglichen, das durch das Pulver erzeugt wird.

## Claims

1. A tooling (2) for implementing a method for flash sintering a powder consisting of at least one organic element, preferably of natural origin, comprising a die (4) delimited by an outer face (8, 12) and an inner face (10), the inner face (10) delimits a chamber (18) open at an upper surface (12) of the die (4), the die (4) includes at least one passage (24) between its outer face (8, 12) and its inner face (10), configured to enable the evacuation of a gas generated by a powder consisting of at least one organic element, present in the chamber (18) during the implementation of a flash sintering method, **characterised in that** at least one passage (24) forms a slot between two separate lateral faces (16) of the die (4).

2. The tooling (2) according to claim 1, **characterised in that** the maximum spacing between the two lateral faces (16) is equal to or smaller than the smallest diameter of the particles of a powder consisting of at least one organic element that is to be sintered in the chamber (18).

3. The tooling (2) according to claim 1 or 2, **characterised in that** the die (4) is configured to enable the two lateral faces (16) to move away from one another by 100 µm at most, preferably by 50 µm.

4. The tooling (2) according to one of claims 1 to 3, **characterised in that** the die is configured to enable the two lateral faces (16) to move away from one another by 100 µm at most, preferably by 50 µm at most, when a pressure equal to or lower than 200 MPa is applied to the inner face (10) of the die (4).

5. The tooling (2) according to one of claims 1 to 4, **characterised in that** the lateral faces (16) have complementary shapes.

6. The tooling (2) according to one of claims 1 to 5, **characterised in that** the die (4) is open at its upper surface (12), so as to enable the insertion of at least one piston into the chamber (18), and **in that** at least one passage (24) extends according to a direction normal or substantially normal to the direction of insertion of the piston into the chamber (18).

7. The tooling (2) according to claim 6, **characterised in that** the lateral faces (16) are parallel or substantially parallel to the direction of insertion of a piston into the chamber (18).

8. The tooling (2) according to one of claims 1 to 7, **characterised in that** the die (4) includes at least two passages (24), separating the die (4) into several distinct portions (6), said portions (6) being held together by means of a holding means (20) configured to limit the spacing to a value equal to 100 pm, preferably equal to 50 pm, between two adjacent portions (6) of the die (4).

9. The tooling (2) according to claim 8, **characterised in that** two adjacent portions (6) of the die (4) form an angle in the chamber (18) and **in that** said portions delimit a passage (24) leading along said angle.

10. The tooling (2) according to claim 8 or 9, **characterised in that** the die (4) comprises at least four distinct portions (6), delimiting a cubic-shaped chamber (18).

11. The tooling (2) according to one of claims 1 to 10, **characterised in that** the chamber (18) is open at a lower surface of the die (4) and **in that** at least one passage (24) leads to the upper surface (12) and the lower surface of the die (4).

12. The tooling (2) according to one of claims 1 to 11, **characterised in that** the die is electrically conductive.

13. A method for flash sintering, conducted under a controlled atmosphere, a powder consisting of at least one organic element, preferably of natural origin, using a tooling (2) according to one of claims 1 to 12, implementing:
- a step of positioning at least one sheet over the inner face(s) (10) of the die (4), so as to cover at least one portion of a passage (24) leading into the chamber (18), said sheet(s) being permeable to a gas; and
- a step of filling the chamber (18) with a powder so that the powder partially or completely covers at least one sheet, the smallest powder particles having dimensions equal to or larger than the dimensions of the pores of the sheet(s) in order to prevent the insertion of the powder into the passage(s) (24) covered by said sheet(s); and
- a step of heating and/or applying a uniaxial load on the powder so as to enable sintering thereof, under a controlled atmosphere, to enable the formation and then the evacuation through at least one passage (24) of a gas generated by the powder.

14. A method for flash sintering, conducted under a controlled atmosphere, a powder consisting of at least one organic element, preferably of natural origin, using a tooling (2) according to one of claims 1 to 12, implementing:
- a step of shaping the powder prior to its insertion into the chamber (18), by a method for compacting the powder at a pressure equal to or higher than the pressure applied on the powder during sintering thereof in the chamber (18); and
- a step of filling the chamber (18) with the compacted powder so that the powder partially or completely covers the inner face (10) of the chamber (18); and
- a step of heating and/or applying a uniaxial load on the compacted powder so as to enable sintering thereof, under a controlled atmosphere, to enable the formation and then the evacuation through at least one passage (24) of a gas generated by the powder.
